# EUROPEAN PATENT SPECIFICATION

(11) **EP 2 445 618 B1**
(45) Date of publication and mention of the grant of the patent: **31.07.2013**
(21) Application number: 10727799.8
(22) Date of filing: 21.06.2010
(51) Int. Cl.: B01F 3/04, B01F 5/04

(54) **APPARATUS AND METHOD FOR INTRODUCING A GAS INTO A LIQUID**
VORRICHTUNG UND VERFAHREN ZUR EINFÜHRUNG EINES GASES IN EINE FLÜSSIGKEIT
APPAREIL ET PROCÉDÉ POUR INTRODUIRE UN GAZ DANS UN LIQUIDE

(30) Priority: 22.06.2009 GB 0910756
(43) Date of publication of application: 02.05.2012
(73) Proprietor: Hydroventuri Limited, Newport NP18 2HJ (GB)
(72) Inventor: WEST, Harvey Samuel, Newport South Wales NP19 8AY (GB)
(74) Representative: Mills, Julia
(86) International application number: PCT/GB2010/001217
(87) International publication number: WO 2010/149958

(56) References cited:
- EP-A1- 0 305 251
- EP-A1- 1 716 918
- EP-A2- 0 190 688
- WO-A1-85/01888
- WO-A1-2005/108549
- DE-A1- 4 135 878
- DE-A1- 4 224 911
- DE-A1-102008 025 325
- FR-A2- 2 255 095
- US-A- 3 545 731
- US-A- 3 854 909
- US-A- 4 193 950
- US-A- 5 043 104

## Description

### FIELD OF THE INVENTION

The present invention relates to the field of multi-phase fluid flows and in particular to introducing gas into a flowing liquid.

### BACKGROUND OF THE INVENTION

Injecting gases into a liquid is desirable in many fields. The ability to inject large quantities of gas into substantial bodies of liquid varies depending on a number of factors, such as turbulence, orifice size etc. The mixing of the gas within the liquid and mass transfer between them are also issues that vary depending on conditions.

Examples of fields where the introduction of a gas into a liquid is desirable are fermentation, industrial and wastewater treatment, clean water treatment and energy generation.

With regard to the treatment of water, a certain concentration of dissolved oxygen (DO) is necessary in any body of water to ensure the occurrence of self purification processes. If the oxygen requirement cannot be supplied naturally, then the purification processes cease and the water turns septic. Engineering techniques exist to avoid this extreme condition occurring. Assisted aeration maintains DO levels and accelerates the purification processes. An added advantage of assisted aeration may be the removal of volatile organic compounds which are ultimately responsible for tastes and odours.

There are several different designs of aerators. They are classified into two broad types: surface mechanical agitator devices (which are better suited for shallow tanks as they entrain air at the water surface by violent agitation) and dispersed air units. In the latter, the air is introduced in the aeration tank under the form of bubbles. The main design issues associated with all dispersed air systems are that they have to generate fine bubbles- in order to ensure large interfacial area and therefore enhanced oxygen transfer from the gas to the liquid. At the same time, the practical problems and large power requirements they entail have to be minimised or at least reduced. Comparisons between the various types and relative advantages are reported in a standardised form as the Standard Oxygen Transfer Efficiency (SOTE) which represents the fraction of oxygen brought in contact with the water that actually dissolves into the water at standard temperature and pressure conditions, the Standard Oxygen Transfer Rate (SOTR) which represents the rate of oxygen transfer observed at standard temperature and pressure when the DO level in the water is initially zero, and the Standard Aeration Efficiency (SAE) which represents the energy consumed in dissolving a specified amount of oxygen.

The diffusers which belong to the family of dispersed air systems, are the most commonly used aerators. Fine air bubbles are injected at the bottom of an aeration tank via porous ceramic plates or perforated membranes. These diffusers rely on an energy intensive process (the compression of gas) but provide a high performance in terms of oxygen transfer (SAE around 3.6 - 3.7 kg/kWh).

Another category of dispersed air systems is venturi-based devices. Their operating theory is based on the Bernoulli's principle. The water phase flows through a converging section before being accelerated in the throat (or constriction), thus creating reduced pressures and allowing a continuous air stream to be entrained into the water system by a pressure difference. The mixture air+water penetrates the diverging section and the oxygen transfer from the gaseous to the liquid phases begins. These devices are less expensive in terms of energy consumption than the diffusers but they suffer an inferior performance in terms of oxygen transfer from air to liquid (SAE around 0.9 - 2.3 kg/kWh).

The aeration performance of a given device depends not only on the supply of oxygen (i.e. in the form of fine bubbles) in the treatment liquid, but also on the thorough and uniform distribution of the gas within the diffusion region. There are clear advantages to the use of a simple cylindrical geometry, as in venturi-based aerators, in terms of reducing energy losses. However, this argument becomes less clear when large volumes of air are introduced along the tube wall. In this case, a major difficulty with such devices is the tendency of the air bubbles to accumulate in the boundary layer at the walls of the pipe. This phenomenon may be responsible for creating instabilities in the diverging section resulting in separation, stall and high energy losses.

The introduction of a gas into a liquid is also known in the field of power generation. WO03/081029 for example discloses a gaseous transmission fluid that is used to drive a turbine and gets its kinetic energy from being sucked into a venturi in which liquid flows. A problem with such a device is that it requires high suction pressures to effect delivery of the gas directly into the venturi and to generate a pressure differential that is large enough for satisfactory turbine operation. Such high pressures are difficult to achieve with a venturi and this document addresses the problem by providing a fluid directing arrangement prior to the venturi for imparting angular momentum to the primary liquid flow as it enters the venturi. This provides a reduced pressure which helps entrain the driving gas. However it has the drawback of additional infrastructure in the path of the liquid flow.

In general, when a gas is injected into a liquid there is a propensity for bubbles to congregate on upper surfaces and to coalesce with each other. These events inhibit good mixing and mass transfer between the two phases. They may also result in dramatic accumulation of air in the device leading to saturation and stall phenomenon thus inhibiting further gas injection into the liquid flow. Recirculation zones may form in the liquid flow generating substantial energy losses. These are typical challenges that need to be addressed in this field.

It would be desirable to be able to introduce gas efficiently into a liquid in relatively large amounts while avoiding the problems of stalling of the device due to coalescence of bubbles and increased resistance to flow caused by large zones of flow separation. It would also be desirable to achieve a well-distributed mixture of liquid-gas bubbles within the device, while keeping energy consumption low.

Document DE-A-41 35 878 discloses an apparatus in accordance with the preamble of claim 1.

### SUMMARY OF THE INVENTION

Viewed from a first aspect, the present invention provides an apparatus for introducing gas into a liquid in accordance with the features of claim 1.

The present invention recognises the problems associated with introducing gas into a liquid, such as the coalescence of the bubbles resulting in increased resistance to flow and possibly stalling of the device. It recognises that this problem can be particularly acute where a large volume of gas is introduced and where it is introduced in a flow accelerating constriction. It addresses this problem by segmenting the flow such that a plurality of discrete channels are provided that are isolated from one another in a direction perpendicular to the overall direction of flow of fluid through the conduit. Thus, the gas is introduced into the liquid in discrete channels, which is a simple yet effective way of helping to avoid the bubbles from coalescing, as portions of the flow are physically isolated from each other. When the portions of the flow later join, the bubbles are distributed across the flow which reduces the risk of them coalescing.

It should be noted that in the above where the term fluid flow is used this may be the liquid flow just prior to and during introduction of the gas and it may also be the two phase flow following introduction of the gas, where the gas is entrained in the liquid.

In some embodiments, said plurality of channels are arranged to segment flow about a central point of said conduit.

Although the channels can be arranged in a number of different ways provided that they segment the flow and thereby ensure that bubbles are introduced into different physically separated portions, it may be advantageous to segment the flow about a central point as such an arrangement segments flow while generally not providing too great an increase in resistance to flow.

In some embodiments, said plurality of channels each have a form of a sector of said conduit.

A particularly advantageous way of splitting the flow is to segment it such that the conduit is separated into sectors. This is a way of segmenting the flow into portions with fairly equal flow patterns, thus each channel can absorb similar amounts of gas assuring a good distribution of the gas within the flow.

In some embodiments, said conduit comprises a flow accelerating constriction, said fluid directing formation being arranged within said flow accelerating constriction.

In some embodiments, the fluid directing formation can itself form the flow accelerating constriction while in others it can be arranged in a flow accelerating constriction. The latter arrangement provides an increased acceleration of the flow and therefore a greater reduction in pressure. Although introducing gas into a flow accelerating constriction provides an increased sucking power it does have the disadvantage that the flow is already constricted and as such, there is more likelihood of the bubbles coalescing. However, the individual channels help ensure the bubbles are introduced into different parts of the flow and thereby help alleviate this problem.

In some embodiments, at least some of said orifices are conduit orifices formed in an outer surface of said conduit at positions corresponding to at least some of said channels.

Although, the orifices can be formed in a number of places, it may be advantageous to form them in the outer surface of the conduit as this is simple to design with the gas being easy to supply to such a formation.

In some embodiments, said conduit orifices are arranged such that adjacent orifices along a length of said conduit are at different circumferential positions on said conduit.

For the orifices that are arranged on the outer surface of the conduit it may be advantageous to arrange them so that they are located at different circumferential positions. This helps the mixing of the gas within the liquid and reduces bubble coalescence as the orifices are located at a distance from each other and it also avoids gas entrained into the conduit via these orifices being introduced directly upstream of a neighbouring orifice at a same circumferential position.

In some embodiments, said conduit orifices are arranged along at least one substantially helical path.

A helical path is a particularly advantageous arrangement as this shape may introduce a rotational component to the flow and also keeps the orifices spread across the circumference of the conduit.

In some embodiments, at least some of said conduit orifices comprise shielding elements for shielding said orifices from said flow, said shielding elements being arranged at an upstream side of said orifices and being at an angle of less than 45° with respect to a direction of flow.

The use of shielding elements arranged at an angle helps divert the flow away from the orifice and allows the gas stream to emerge with greater momentum and align itself to the flow direction. It also enables smaller bubbles to be generated. These effects reduce energy losses and thereby increases the amount of gas that can enter the flow.

In some embodiments, said flow directing formation is hollow and is in fluid communication with said gas source, at least some of said orifices being arranged on said fluid directing formation at a position corresponding to said channels.

Alternatively, or even additionally the flow directing formation may be hollow and be in fluid communication with the gas source with the orifices being arranged on the fluid directing formation. The provision of the fluid directing formation within the flow provides additional possible sites for orifices for introducing gas into the flow. Furthermore, introducing gas from the fluid directing formation means that the gas is introduced towards the middle of the flow and prevents or at least reduces the possibility of bubbles collecting at the edge of the conduit where flow is often slower.

Said fluid directing formation comprises a central structure supporting a plurality of vanes, said plurality of vanes defining said channels.

Although the fluid directing formation can have a number of forms an effective form is a central structure supporting a plurality of vanes, the vanes defining the channels. Such a shape can be aerodynamic and thus, produce little resistance to flow increasing the devices' overall efficiency.

In some embodiments, said fluid directing formation comprises a central structure with a plurality of vanes, said plurality of vanes defining said channels, wherein said plurality of orifices are arranged on said vanes at a region of reduced pressure.

An advantageous place to position the orifices is on the vanes at a region of reduced pressure as this encourages the gas to be sucked into the fluid flow and thus, helps increase the amount of gas that can be introduced.

In some embodiments at least some of said fluid directing formation orifices are located in a region of an apex of a wedge-shaped depression on said vanes.

Providing the orifices towards an apex of a wedge-shaped depression on the vanes allows the gas to spread out into a broad sheet which is swept along the face of the vane, giving a large surface area from which bubbles can be generated.

In some embodiments, said plurality of vanes are arranged at an angle with respect to the direction of flow such that a rotational component is introduced by said vanes to said fluid flowing between them.

The vanes are arranged at an angle with respect to the direction of flow so that a rotational component is introduced by the vanes. This helps produce a swirling motion which helps mix the gas and liquid and also tends to send the gas towards the centre of the flow stopping it adhering to the edge and restricting the flow. If the flow is oriented horizontally, the rotational acceleration also acts to counteract the effects of gravity by suppressing bubble rise due to buoyancy. This can enhance mass transfer due to the prolonged existence of a bubbly flow. Turbulence in the region downstream of the device may also be reduced leading to reduced energy demands.

In some embodiments, said plurality of vanes are mounted rotationally on said central structure.

Although there are advantages in having vanes that do not move, as moving structures under water may require maintenance, it may be advantageous to mount the vanes rotationally on the central structure so that they themselves can provide a swirling motion to the liquid helping mix the flow and further reduce the likelihood of bubbles coalescing.

In some embodiments, said fluid directing formation has an aerofoil shape with rounded surfaces at an upstream position leading to tapered surfaces.

It may be advantageous if the fluid directing formation has an aerofoil shape as this reduces the resistance to the flow that this formation provides.

In some embodiments, said plurality of vanes have flat inner surfaces.

Vanes with flat inner surfaces are effective for providing channels with low resistance to flow.

In some embodiments, said central structure is between 3 and 6 times as long as a diameter of said conduit and said blades are between one and 3 times as long as said diameter.

The length of the vanes and the central structure affect the flow and bubble coalescence. A long structure separates the flow for a longer time and decreases turbulence, it also increases the extent of the flow experiencing strong strain which is beneficial to bubble break up. However, there is an increased resistance to flow in the constricted region. An advantageous length for the central structure and blades that provide a good balance of these effects is one where the central structure is between 3 and 6 times as long as a diameter of the conduit it is located in, while the blades are between 1 and 3 times as long.

In some embodiments, said orifices are formed on a strip mounted on a surface of said channels.

Although the orifices can be formed in a number of ways they may be formed on a strip mounted on a surface of the channels as this is a convenient way of forming the orifices.

In some embodiments this strip is a flexible permeable membrane which provides an effective way of introducing many gas bubbles into the flow. Flexible permeable membranes are well suited for introducing bubbles of gas into a liquid as they have many small orifices. However, there is a technical prejudice against using these flexible permeable membranes in fluid flow systems as they are quite fragile and where a reduced pressure is used to suck in the gas they can be distorted and possibly break. Furthermore, it is thought that a membrane that is pulled into the constriction of a constricted flow will obstruct the constriction and cause resistance to the fluid flow. However, it has surprisingly been found that these flexible permeable membranes do provide a good mechanism for introducing gas into a liquid flow. Furthermore, they have the advantages of breaking up the liquid / gas interface at the injection point. Furthermore, due to the large number of orifices, lower gas flows through each orifice can be used with the resulting large number of bubbles causing disruption to the flow. This design offers the potential of highly stable flows (low head loss) with high mass transfer characteristics.

In some embodiments, said apparatus further comprises a fluid driveable engine, said fluid driveable engine being arranged in fluid communication between said gas source and said orifices such that gas being drawn from said gas source through said orifices acts to drive said fluid driveable engine.

Where a sufficient amount of gas is able to be drawn into the liquid flow it may be advantageous to use the flow of gas not only to provide a gas liquid mixture but also to drive a fluid drivable engine such as a turbine. If for example this device was located somewhere remotely then this turbine could be used for powering systems that might be needed in association with the device.

Although the apparatus can be used for a number of gas/ liquid mixtures it is particularly useful for adding air into water. Aeration of water is a common problem and embodiments of the invention are particularly well suited to providing water aeration devices.

In some embodiments, said gas comprises air and said apparatus further comprising an ozone generator, said ozone generator being arranged in fluid communication between said gas source and said orifices such that at least a portion of said gas being drawn from said gas source through said orifices passes through said ozone generator.

Where the air being drawn into the fluid flow is being used to improve water or other fluid quality by aerating it, this can be made more effective if an ozone generator is used to generate ozone from the oxygen within the air. This will provide better oxygenation and oxidization of polluting materials of the water or other fluid from the same air flow and can be used to increase the fluid quality where this is important.

In some embodiments said fluid drivable engine comprises a turbine for generating electricity and said ozone generator is powered by electricity generated by said turbine or supplied from elsewhere.

Although the ozone generator can be powered in a number of ways, where the air flow is suitable for driving a turbine a particularly advantageous system can be produced whereby the air flow passing through the turbine generates the electricity required by the ozone generator. In this way no external power supply is required for the system and good oxygenation of the flow and oxidization of polluting materials therein can be produced.

In some embodiments, the apparatus comprises a portion of a water treatment plant while in other embodiments it comprises a part of a fermentation apparatus and in others it can form part of an air cooling plant. In the latter case it can be advantageous if a heat exchanger is arranged to cool the inlet air flow prior to it being entrained in the water. Cooler air is denser and thus, greater quantities can be entrained whilst the heat taken out through the heat exchanger can be utilised for other purposes.

A further aspect of the invention provides a method of introducing gas into a liquid in accordance with claim 15.

### BRIEF DESCRIPTION OF THE DRAWINGS

The present invention will be described further, by way of example only, with reference to embodiments thereof as illustrated in the accompanying drawings, in which:
Figure 1 shows a fluid directing formation arranged in a conduit;
Figure 2 shows a venturi arrangement in which the fluid directing formation of Figure 1 is located;
Figure 3 shows an apparatus for introducing air into a water flow;
Figure 4 shows a cross section of an apparatus for introducing air into a water flow;
Figure 5 shows shielded suction ports arranged on the conduit;
Figure 6 shows the arrangement of the suction ports of Figure 5 on the circumference of the conduit;
Figure 7a shows an aerofoil for a zero angle of attack;
Figure 7b shows a cross section of the channels generated by the aerofoil of Figure 7a;
Figure 8a shows an aerofoil for a non-zero angle of attack;
Figure 8b shows a cross section of the channels generated by the aerofoil of Figure 8a;
Figure 9a shows gas entry ports on a blade of an aerofoil;
Figure 9b shows a cross section through a blade of an aerofoil;
Figure 10 shows an apparatus for both aerating a water flow and generating electricity according to an embodiment of the present invention;
Figure 11 shows an apparatus in which the air flow provides air cooling; and
Figure 12 shows an embodiment wherein ozone is generated in the air flow.

### DESCRIPTION OF EMBODIMENTS

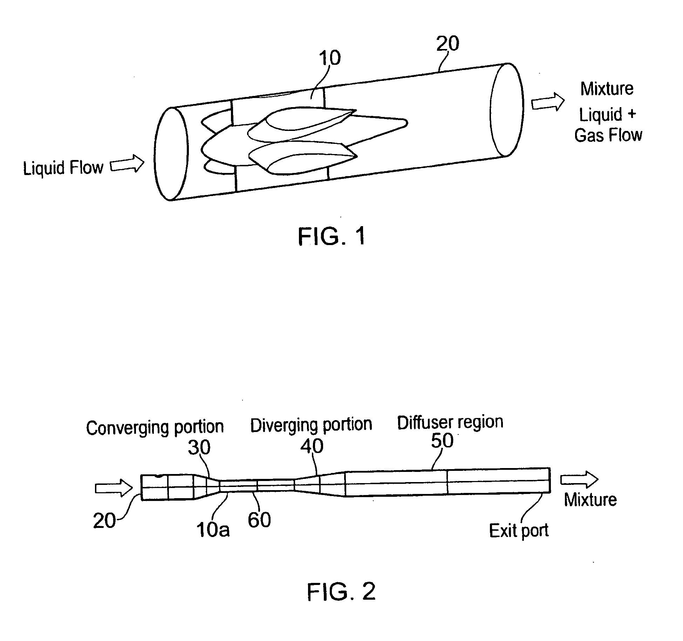

Figure 1 shows a flow directing arrangement 10 arranged within a conduit 20 such that it restricts the flow and thereby forms flow accelerating constrictions in the form of several isolated channels. Liquid entering the conduit is caused to accelerate as it flows through these channels. This acceleration causes a reduced pressure which sucks gas into the liquid flow through orifices (not shown) that are arranged on the channels' walls. Thus, gas is introduced into each channel and this ensures that the gas is introduced into different parts of the flow. Furthermore, gas bubbles introduced into one channel are isolated from and thus, cannot coalesce with, gas bubbles introduced into other channels. The overall flow at the exit of each channel takes the form of multiple independent, separate bubbly streams, the number of streams corresponding to the number of channels.

The shape of the fluid directing arrangement 10 is such that it combines high aerodynamic performance with manufacturability. It presents the following key feature: a streamlined structure inserted into a straight pipe with the objective to create a flow constriction.

The fluid directing arrangement 10 has in this embodiment the form of an aerofoil surrounded by blades and has the following characteristics.

It presents a rounded front and a tapering back edge, to reduce resistance to flow.

The blades have rounded outer faces to fit flush within a straight circular pipe, and thereby provide channels that are isolated from each other.

The blades have flat inner faces, providing a low resistance to fluid flow.

As an example, the fluid directing arrangement 10 may have the following characteristics:
Aspect ratio of the aerofoil (length/width): between 3 and 4, preferably 3.5;
Length of the aerofoil: between 500mm and 600mm preferably 525mm;
A total of six blades presenting an aspect ratio of between 5 and 7, preferably 6 (20 to 30 mm preferably 25mm wide and 150mm to 250mm preferably 200 mm long);
Diameter of each orifice: between 1.5 and 7.5mm preferably 2 mm in some embodiments and 6mm in others.

The constriction ratio is approximately 1:4, and the device is designed to fit within a 100 mm diameter pipe.

The arrangement generates a bubbly two phase flow (dispersed gas/continuous liquid) downstream of the constricted channels. The generation of a bubbly flow has two functions: it reduces the energy required to drive a given gas flow rate, and providing that the bubbles are small enough it promotes mass transfer between the two phases due to high interfacial area density.

In the embodiment of Figure 1, the fluid directing arrangement 10 itself forms the restriction for providing flow acceleration and a reduced pressure for sucking in the gas. Figure 2 by contrast illustrates an embodiment in which fluid directing arrangement 10 is located in a constriction within a conduit 20. This embodiment therefore provides a greater constriction to the fluid flow and thus, greater acceleration. It also however, provides an increase in the resistance to flow.

Figure 2 shows a conduit 20 with a converging portion 30, a constricted portion 60 and a diverging portion 40. In this embodiment the fluid directing arrangement 10 is located at the leading edge of the constriction pipe 10a rather than being recessed within it.

In the throat of the venturi (or constriction) 60 a continuous gas stream is sucked in via ports located in the individual channels (not shown) that are connected to a gas source due to the pressure drop, and the flow takes the form of several mixed streams originating from each channel and made of continuous liquid phase and dispersed gas bubbles (two-phase flow).

Some of the key parameters of importance affecting the efficiency of the device relate to the total number of suction ports, their dimensions, locations and configurations.

In the diverging cylinder (or expansion) 40 the diameter increases up to a fixed value as it gets nearer to the cylindrical diffuser region 50 and the flow regime becomes more complex. The behaviour of the mixture is strongly influenced by the gas / liquid distribution as it enters this zone. Energy losses are dominated by the generation of turbulence and flow separation. The risk of formation of gas pockets is high with the detrimental consequences of reduced performance and stalling. This shows the strong influence of the expansion design on the overall performance of the device. A long smoothly curving section is preferred, due to the importance to preventing flow separation in this portion.

As an example, a device like this that is used for water aeration may have the following dimension characteristics: for the converging portion, a converging angle of between 14 and 21°, an inlet diameter of between 80 and 120mm, preferably approximately 100mm, an outlet diameter of between 40 and 60 mm and preferably approximately 50mm for the throat, a constriction ratio of approximately 4:1; and for the diverging portion and diffuser region, a diverging angle of between 4° and 8° preferably approximately 6°, an inlet diameter of between 40 and 60 mm and preferably approximately 50mm, an outlet diameter of between 80 and 120mm, preferably approximately 100mm, with the length of the diffuser being between 250 and 350 mm, preferably approximately 300mm.

Introducing the gas into individual channels ensures that it is distributed evenly within the flow and helps reduce bubble coalescence.

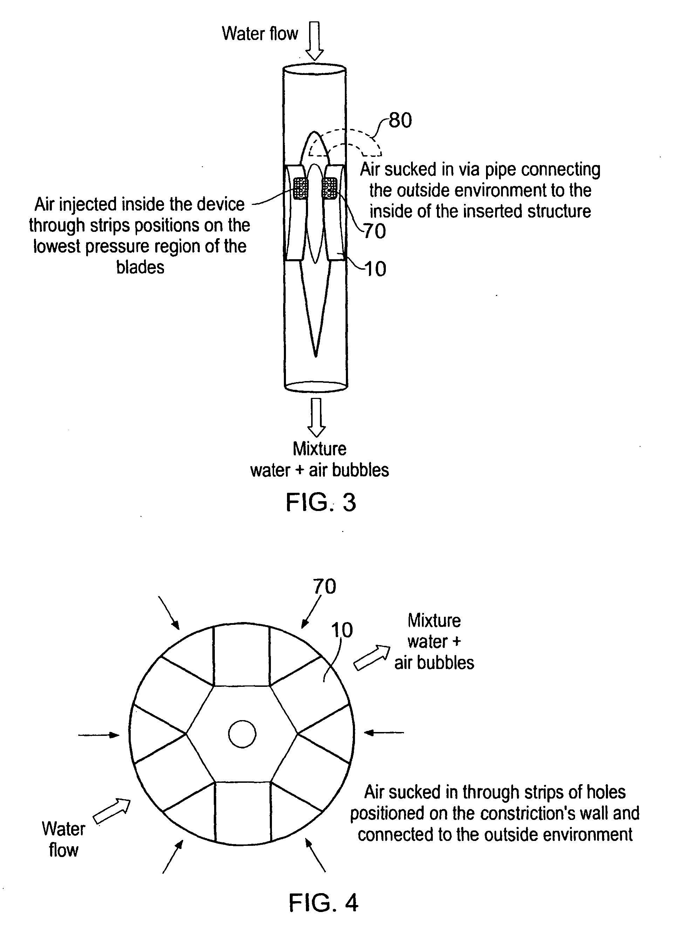

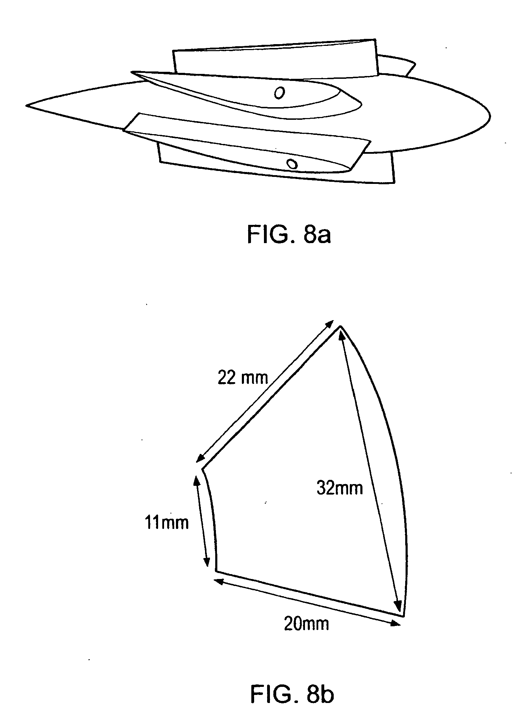

Figure 3 shows a further embodiment of the present invention where air is injected into a water flow from within the flow directing arrangement 10, through strips positioned on the lower pressure region of the blades. In this embodiment as in the embodiment of Figure 1 the gas directing arrangement 10 is an aerofoil with zero angle of attack. In accordance with the invention, an aerofoil with non-zero angle of attack is provided (see Figure 8). In such a case, the blades are angled in order to impart a swirl motion to the downstream flow. This has an advantage of improving mixing of the fluid, but provides more resistance to flow.

In this embodiment the air is introduced via simple holes located on a strip 70. As the orifices are in this embodiment on the fluid directing arrangement 10 then this arrangement is hollow and is provided with a pipe 80 that is connected to a source of air, and allows air to be sucked into the hollow arrangement 10.

In this embodiment the strips 70 are positioned on the blades along the regions of lowest pressure. This helps produce a good sucking force for introducing a lot of air. However there is a risk that introducing air at these points may promote flow separation. Thus, in other embodiments such as that shown in cross section in Figure 4 the strips are located on the constriction walls along the flow channels between the blades. This also has the advantage of it being easier to introduce the gas to the device.

In still other embodiments the orifices are located in both the walls of the conduit and on the blades of the aerofoil fluid directing arrangement. This is clearly more complicated to build but has an advantage of introducing the gas into many different portions of the flow.

It should be noted that although the above embodiments are described with respect to introducing air into water, they could also be used for introducing other gases into other liquids, as would be clear to the skilled person.

In the embodiments of Figures 3 and 4, the orifices are provided within strips. These strips may be strips of membrane, reinforced by a rigid frame to prevent excessive deformation and collapse. The membrane may be made from common materials (PTFE, EDTM, Silicon), with material choice largely aimed at alleviating long term operational problems such as fouling. The manufacturing process involves the creation of small perforations or slits, the size and spacing of which is the key to improving or optimising bubble size, gas flow and pressure drop across the membrane. The membranes are designed to be operated within certain ranges of trans-membrane pressure and a certain amount of elastic strain is necessary for optimal performance. The membranes are connected to a passive reservoir (the hollow fluid directing arrangement 10 in Figure 3, or a reservoir surrounding the conduit in an embodiment such as that of Figure 4), which in turn is connected to a gas source such as the atmosphere via a line.

An advantage of using membranes is that it breaks up the liquid / gas interface at the injection point, making use of both the momentum of the liquid stream and the geometry of the orifice itself. This strategy favours lower gas flow rates from large numbers of orifices designed to cause some form of disruption to the flow. This design offers the potential of achieving well-distributed bubbly flows with high mass transfer characteristics.

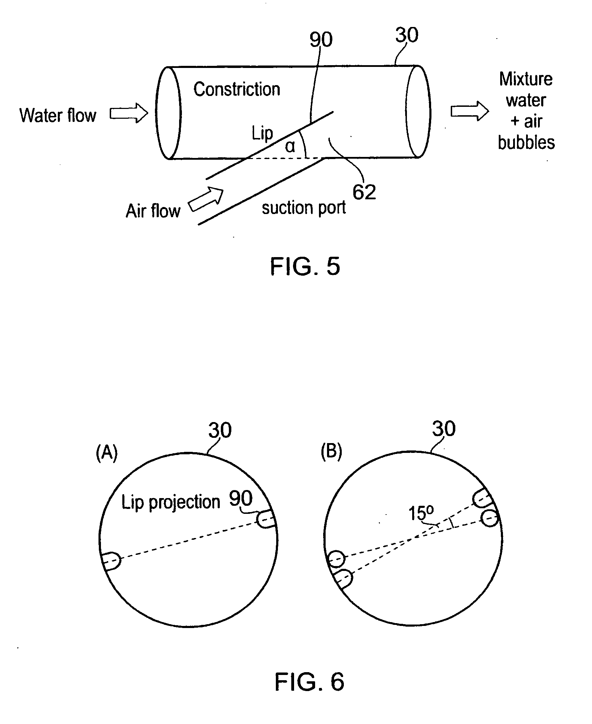

In some embodiments gas is introduced through orifices with those on the wall of the pipe have lips of shielding elements. Figures 5 and 6 show such orifices 62. The aerofoil is not shown in these figures for clarity purposes, although it should be understood that it is present within the conduit. In this embodiment lips or shielding elements 90 are placed upstream of each port or orifice 62. Their function is to divert the flow away from the downstream edge of the port, while allowing the gas stream to emerge with greater momentum and align itself to the flow direction. The insertion angle of the lip a is between 25° and 35° preferably about 30°.

The orifices or ports themselves may be arranged at an angle with respect to each other as shown in figure 6, to avoid gas being injected into the flow immediately upstream of a subsequent port. In this embodiment they are located at 15° to each other, although it could be a different angle, angles between 10° and 25° being suitable. It may also be desirable to provide orifices that are larger in the direction of flow, as this has been shown to aid bubble formation.

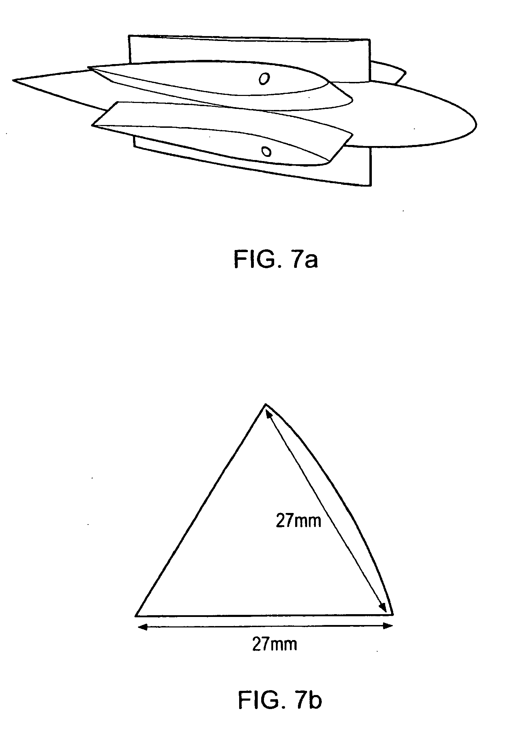

There are two possible arrangements of the aerofoils, there is the zero angle of attack where the aerofoil blades are straight and exert no rotational forces on the flow, as is shown in Figures 7a and 7b, and the non-zero angle of attack where the aerofoil blades are angled and shown in Figures 8a and 8b.

Both exert a rotational force on the flow, generating a swirling flow downstream of the device as is designs aim to improve the efficiency of a traditional venturi device by reducing large scale secondary flow currents which increase energy demand while retaining high levels of linear shear which enhance mass transfer rates. The swirl generated by the non-zero angle of attack design has three additional effects:
When the flow is oriented horizontally, the rotational acceleration counteracts the effects of gravity by suppressing bubble rise due to buoyancy. This enhances mass transfer due to prolonged existence of bubbly flow.

Turbulence intensity in the region downstream of the device is reduced, leading to reduced energy demand.

It further enhances mass transfer rates.

It should be noted that in both of these designs increasing the length of the aerofoil reduces the level of turbulence which leads to vortical flow motions and increased dissipation. Increased dissipation is costly in terms of energy while vortical flow has negative implications in terms of oxygen transfer efficiency. Indeed the recirculation flow patterns tend to enhance the likelihood of bubble coalescence. Increasing the length of the aerofoil will reduce the turbulence and also increase the extent of the flow experiencing strong strain, which is beneficial to bubble break-up. Another way of reducing the level of turbulence is to alter the design of the gas entry ports as is shown in Figures 5, 6 and Figures 9a and 9b.

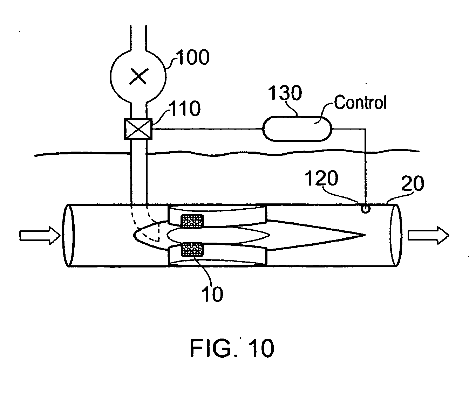

There can be conflicting requirements for designs, in some embodiments there may be desired a very high void fraction which may lead to the production of larger gas bubbles with shorter residence time. This may be useful if the gas flow is used for power generation, for example as is shown in Figure 10. In other embodiments it may be advantageous to have very small bubbles with long residence time, potentially at a lower void fraction. This is particularly useful where the gas is being used for oxygenation and mass transfer is required. In the former case, zero angle of attack may be desirable with a longer length aerofoil and gas supplied to ports drilled both on the surface of the blade and on the walls of the surrounding pipe. In this case, in order to increase the gas flow and as the size of the bubbles is not important gas entry ports with a diameter as large as 6mm may be used. As the bubble size distribution is not important in such a case the device does not need to have a significant length diffuser region. A further increase in the amount of gas entrained may be achieved by a reduction in internal pressure at the gas injection point, perhaps by using a siphon arrangement or by placing the device within the constriction of a larger venturi.

Where mass transfer of the gas is desired in the diffuser region then clearly this region (50 in Figure 2) needs to be of a reasonable length and bubble coalescence should be suppressed. For this purpose, a non-zero angle of attack aerofoil seems to provide a good solution due to its capacity to overcome the buoyancy force and prevent bubble rise in the diffuser region. In this case a long aerofoil is also desirable with smaller gas entry ports. If the outlet of the downstream section is connected to a tank then the implications of variable downstream head need to be considered. If the outlet is near to the tank's surface it may be desirable to use a swirl generated by the blades to drive the plume deep into the tank, thus achieving additional residence time. Alternatively, the outlet may be positioned at a low level leading to a downstream head of several metres. In this case the device may need to be arranged in a siphon in order to generate the necessary sub atmospheric pressures resulting in the need to maintain a stable two phase flow in the descending leg of the siphon to avoid stalling.

It should be noted that although lower gas flow rates are generally achieved with the non zero angle of attack design, there are also lower energy losses observed so that the cost per unit of gas flow generated is approximately equal between designs.

Figure 7a shows the aerofoil for the non-zero angle of attack design. In this design the blade length is between 150-250mm, the hub length is 525mm and gas is injected on both blade faces. The conduit that the aerofoil is inserted in is 100mm. The geometry of the flow channels between the blades is as shown in Figure 7b.

In Figures 8a and 8b the non-zero angle of attack design is shown. This design has a similar blade length to that of the zero angle of attack, but has a slightly longer hub length of 535mm and a fatter hub generally being about 30% greater volume than the hub of the non-zero angle of attack. In this design, the gas is injected only on the underside of the blade and the cross-section of the channel is different being fatter than the cross-section of the channel for the non-zero angle of attack.

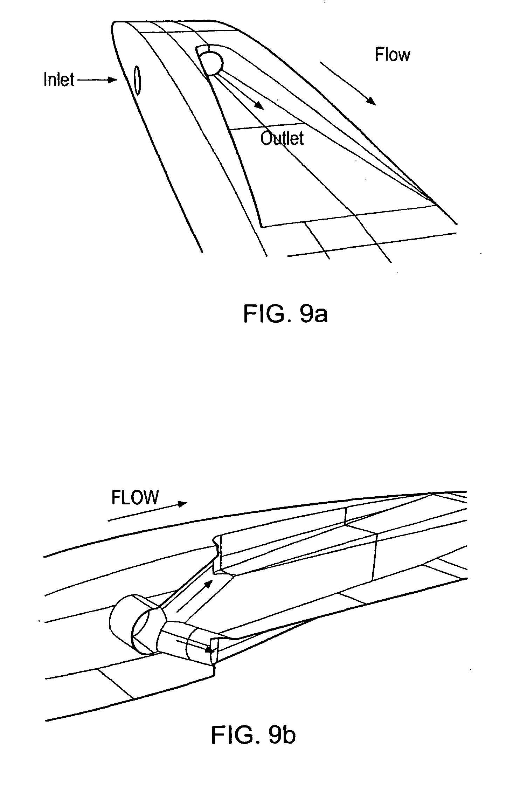

Figures 9a and 9b show the orifices that are on the blades for these designs. As noted previously, in some embodiments there is only an orifice on the underside of the blade in the non-zero angle of attack design, while on the zero angle of attack design there are orifices on both sides of the blade. Gas is injected on the face of the blade to take advantage of the lower pressures and higher strain rates expected in this region. Gas is supplied through the wall of the surrounding channel directly into the aerofoil blade, from there it is directed towards the apex of a wedge shaped depression shown in Figures 9a and 9b located on the blade face. This arrangement allows the gas stream to spread out into a broad sheet, which is swept along the face of the blade. Generation of bubbles is therefore dependant on the dynamic interaction of forces exerted by the gas and liquid streams on the interface.

In this design, although not shown, there is a choke that has been added to the gas feed line in order to provide an independent control mechanism for the gas that is being sucked into the liquid flow. This is found to be helpful at low flow rates. Recirculating gas pockets can occur at the top of the channel in low flow rates, however it has been found that using the choke valve so that the gas flow rate is increased slowly from an initial state helps avoid the formation of these gas pockets. Providing the ability to control the gas flow with the choke helps maintain a desirable swirling bubbly flow regime under different conditions and provides some control to the system. It can also be used to recover from unstable flow situations by reducing gas flow when such unstable flow is detected.

Although in some embodiments it was found desirable to only inject gas on the low curvature blade face, i.e. the underside of the wing, in some embodiments it is desirable to inject gas into the high curvature side of the blade the top of the wing as this reduces some of the swirl, the swirl being an unpredictable effect and therefore undesirable in some circumstances.

Figure 10 show an apparatus for both aerating a water flow and generating electricity. The apparatus comprises a flow directing arrangement 10 within conduit 20. Conduit 20 is placed within a water flow and water is accelerated as it reaches the constricted area at the flow directing arrangement 10. This results in a reduction in pressure in the fluid flow and air from the atmosphere is sucked in. The air sucked in drives turbine 100 which can be used to generate electricity.

In this embodiment there is a controllable choke 110 on the air inlet pipe, which is controlled by control system 130 in response to signals sent by sensor 120. Sensor 120 is a flow sensor which in this embodiment is an optical sensor that senses the phase distribution of the flow in the diffuser region. If it detects that the desirable bubbly flow is not present then it signals this to choke 110 which closes slightly to slow the air intake until the desired flow is attained again.

As will be appreciated by the skilled person, embodiments of the present invention provide an improved system of introducing gas into a liquid and therefore can be used in a number of different situations where the introduction of gas into liquid is required. For example they can be used in water aeration systems or in industrial fermentation processes such as brewing or bio-fuels. They can also be used to stabilise flows such as oil flows.

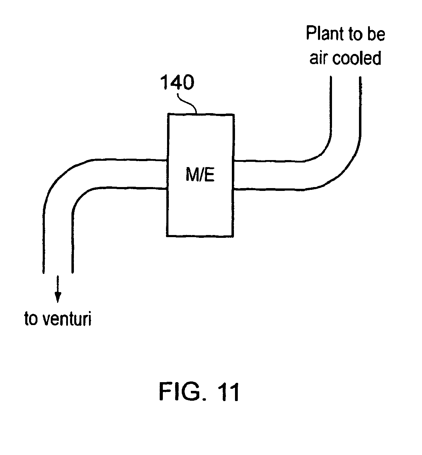

One example of a further use of embodiments of the present invention is in air cooling systems. For example power stations are often located near water sources as they require substantial cooling to operate. Thus, embodiments of the present invention can be used to generate an air flow from nearby water flow using arrangements such as those shown in Figures 1 to 10 and this air flow generated using a venturi within the water flow can be used to provide cooling to the power station. The hot air thereby extracted can be passed through a heat exchanger shown as 140 in Figure 11 and the heat extracted from the air can be used as a heat source for other purposes. Extracting heat in this way not only provides a source of heat but also cools the air before it enters the water. Cooler air has less volume and therefore can be entrained into the water flow more easily. Furthermore, it will not raise the temperature of the water source as much which is advantageous.

It should be noted that in addition to providing cooling to the power station, entraining air into the local water source will have the additional advantage of improving the water quality.

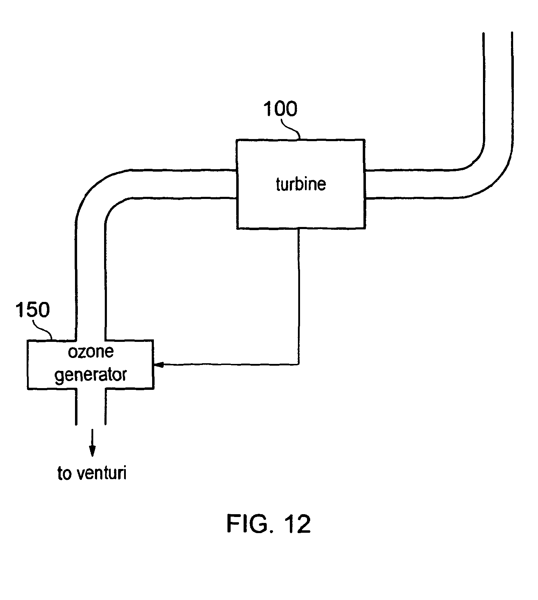

Figure 12 shows an alternative embodiment of the present invention in which a turbine 100 is inserted into and driven by the air flow and electricity generated by this turbine is supplied to an ozone generator 150 that is located in the air flow. This ozone generator 150 uses the electricity from turbine 100 to generate ozone within the air flow. Having ozone within the air that is entrained in the water improves the oxygenation and oxidization abilities of the air and thereby improves the water quality. Using electricity from a turbine that is driven by the air flow itself provides a power saving in all cases and in some cases is particularly advantageous where the water flow is in a remote location such that supplying electricity to it is inconvenient.

Although, in this embodiment electricity is supplied from turbine 100, it should be noted that in other embodiments electricity could be supplied from another electrical source where this is appropriate and where it is not desirable to have a turbine driven by the water flow.

Various further aspects and features of the present invention are defined in the appended claims. Various modifications can be made to the embodiments herein before described without departing from the scope of the present invention, as defined by the claims.

## Claims

1. Apparatus for introducing gas into a liquid comprising:
a conduit (20);
a fluid directing formation (10) arranged within said conduit (20) mid defining a plurality of discrete channels within said conduit (20), said channels being isolated from each other in a direction perpendicular to a direction of fluid flow through said channels, each channel providing a flow accelerating constriction to said fluid flow such that fluid flowing in each of said channels is caused to accelerate as it flows through said flow accelerating constrictions; wherein
at least some of said channels comprise orifices within said flow accelerating constrictions, said orifices being in fluid communication with a gas source, such that said gas is drawn through said orifices to be entrained in said fluid flow by virtue of a reduced pressure in said channels caused by said fluid flow;
said fluid directing formation comprising a central structure supporting a plurality of vanes, said plurality of vanes defining said channels; **characterized in that**
said plurality of vanes are arranged at an angle with respect to a direction of flow such that a rotational component is introduced by said vanes to said fluid flowing passing them.

2. Apparatus for introducing gas into a liquid according to claim 1, said plurality of channels each having a form of a sector of said conduit.

3. Apparatus for introducing gas into a liquid according to any preceding claim, wherein said conduit comprises (20) a flow accelerating constriction, said fluid directing formation being arranged within said flow accelerating constriction.

4. Apparatus for introducing gas into a liquid according to any preceding claim, wherein at least some of said orifices are conduit orifices formed in an outer surface of said conduit (20) at positions corresponding to at least some of said channels.

5. Apparatus for introducing gas into a liquid according to any preceding claim, wherein said vanes are arranged at an angle to said direction of flow and said orifices are located on a high curvature top side of the vanes.

6. Apparatus for introducing gas into a liquid according to any preceding claim, wherein said flow directing formation (10) is hollow and is in fluid communication with said gas source, at least some of said orifices being arranged on said fluid directing formation at a position corresponding to said channels.

7. Apparatus for introducing gas into a liquid according to any preceding claim, wherein at least some of said fluid directing formation orifices are located in a region of an apex of a wedge-shaped depression on said vanes.

8. Apparatus according to any preceding claim, wherein said central structure is between 3 and 6 times as long as a diameter of said conduit and said blades are between one and 3 times as long as said diameter.

9. Apparatus according to any preceding claim, wherein said orifices are formed on a strip (70) mounted on a surface of said channels.

10. Apparatus for introducing gas into a liquid according to any preceding claim, said apparatus further comprising a fluid driveable engine (100), said fluid driveable engine (100) being arranged in fluid communication between said gas source and said orifices such that gas being drawn from said gas source through said orifices acts to drive said fluid driveable engine (100).

11. An apparatus according to claim 10, wherein said gas comprises air and said apparatus further comprises an ozone generator (150), said ozone generator (150) being arranged in fluid communication between said gas source and said orifices such that at least a portion of said gas being drawn from said gas source through said orifices passes through said ozone generator (150) and said fluid drivable engine comprises a turbine (100) for generating electricity and said ozone generator (150) is powered by electricity generated by said turbine.

12. Apparatus according to any one of claims 1 to 10, wherein said gas comprises air and said liquid comprises water and said apparatus comprises a portion of a water treatment plant.

13. Apparatus for introducing gas into a liquid according to any one of claims 1 to 10, wherein said apparatus comprises a part of a fermentation apparatus.

14. Apparatus according to any one of claims 1 to 10, wherein said gas comprises air and said apparatus comprises a part of an air cooling plant that uses an air flow for cooling, said air flow being generated by said air being drawn through said orifices, said apparatus further comprising a heat exchanger (140), said heat exchanger (140) being arranged in said air flow such that air being drawn through said orifices passes first through said heat exchanger (140).

15. A method of introducing gas into a liquid using the apparatus of claim 1 and comprising the steps of:
sending a flow of liquid through a plurality of discrete channels defined by a flow directing formation within a conduit, said fluid directing formation comprising a central structure supporting a plurality of vanes, said plurality of vanes defining said channels such that said channels are isolated from each other in a direction perpendicular to a direction of fluid flow through said channels, and each channel providing a flow accelerating constriction to said fluid flow such that fluid flowing in said channels is caused to accelerate as it flows through said constriction; introducing a rotational component to said fluid flow by said vanes;
sending a flow of gas to a plurality of orifices arranged within said flow accelerating constrictions of at least some of said channels; wherein
said flow of gas is caused to be drawn from said gas source through said orifices by a reduced pressure in said flow accelerating constriction caused by said increased flow rate, to become entrained in said fluid flow.

## Patentansprüche

1. Vorrichtung zur Einführung eines Gases in eine Flüssigkeit, die Folgendes umfasst:
eine Leitung (20);
eine Fluidleitausbildung (10), die in der Leitung (20) ausgebildet ist und mehrere einzelne Kanäle innerhalb der Leitung (20) definiert, wobei die Kanäle in einer senkrecht zu einer Fluidstromrichtung durch die Kanäle verlaufenden Richtung gegeneinander isoliert sind, wobei jeder Kanal eine Strömungsbeschleunigungsverengung für den Fluidstrom bereitstellt, so dass eine Beschleunigung von in jedem der Kanäle strömendem Fluid bei seiner Strömung durch die Strömungsbeschleunigungsverengungen bewirkt wird;
wobei
mindestens einige Kanäle Öffnungen in den Strömungsbeschleunigungsverengungen umfassen, wobei die Öffnungen mit einer Gasquelle in Strömungsverbindung stehen, so dass das Gas durch einen durch den Fluidstrom verursachten reduzierten Druck in den Kanälen durch die Öffnungen gesaugt wird, um im Fluidstrom mitgeführt zu werden;
wobei die Fluidleitausbildung eine mittlere Struktur umfasst, die mehrere Schaufeln stützt, wobei die mehreren Schaufeln die Kanäle definieren; **dadurch gekennzeichnet, dass** die mehreren Schaufeln in einem Winkel bezüglich einer Strömungsrichtung angeordnet sind, so dass das sie durchströmende Fluid durch die Schaufeln mit einer Drehkomponente beaufschlagt wird.

2. Vorrichtung zur Einführung eines Gases in eine Flüssigkeit nach Anspruch 1, wobei die mehreren Kanäle jeweils eine Form eines Sektors der Leitung aufweisen.

3. Vorrichtung zur Einführung eines Gases in eine Flüssigkeit nach einem vorhergehenden Anspruch, wobei die Leitung (20) eine Strömungsbeschleunigungsverengung umfasst, wobei die Fluidleitausbildung in der Strömungsbeschleunigungsverengung angeordnet ist.

4. Vorrichtung zur Einführung eines Gases in eine Flüssigkeit nach einem vorhergehenden Anspruch, wobei mindestens einige der Öffnungen in einer Außenfläche der Leitung (20) an Stellen, die mindestens einigen der Kanäle entsprechen, ausgebildete Leitungsöffnungen sind.

5. Vorrichtung zur Einführung eines Gases in eine Flüssigkeit nach einem vorhergehenden Anspruch, wobei die Schaufeln in einem Winkel zur Strömungsrichtung angeordnet sind und die Öffnungen an einer Oberseite der Schaufeln mit starker Krümmung positioniert sind.

6. Vorrichtung zur Einführung eines Gases in eine Flüssigkeit nach einem vorhergehenden Anspruch, wobei die Stromleitausbildung (10) hohl ist und mit der Gasquelle in Strömungsverbindung steht, wobei mindestens einige der Öffnungen an der Fluidleitausbildung an einer Stelle ausgebildet sind, die den Kanälen entspricht.

7. Vorrichtung zur Einführung eines Gases in eine Flüssigkeit nach einem vorhergehenden Anspruch, wobei mindestens einige der Fluidleitausbildungsöffnungen in einem Bereich eines Scheitels einer keilförmigen Vertiefung an den Schaufeln positioniert sind.

8. Vorrichtung nach einem vorhergehenden Anspruch, wobei die mittlere Struktur zwischen 3 und 6 mal so lang ist wie ein Durchmesser der Leitung und die Blätter zwischen ein und 3 mal so lang sind wie der Durchmesser.

9. Vorrichtung nach einem vorhergehenden Anspruch, wobei die Öffnungen an einem an einer Fläche der Kanäle angebrachten Streifen (70) ausgebildet sind.

10. Vorrichtung zur Einführung eines Gases in eine Flüssigkeit nach einem vorhergehenden Anspruch, wobei die Vorrichtung weiterhin eine durch Fluid antreibbare Maschine (100) umfasst, wobei die durch Fluid antreibbare Maschine (100) in Strömungsverbindung zwischen der Gasquelle und den Öffnungen angeordnet ist, so dass von der Gasquelle durch die Öffnungen gesaugtes Gas zum Antrieb der durch Fluid antreibbaren Maschine (100) wirkt.

11. Vorrichtung nach Anspruch 10, wobei das Gas Luft umfasst und die Vorrichtung weiterhin einen Ozongenerator (150) umfasst, wobei der Ozongenerator (150) in Strömungsverbindung zwischen der Gasquelle und den Öffnungen angeordnet ist, derart, dass mindestens ein Teil des von der Gasquelle durch die Öffnungen gesaugten Gases den Ozongenerator (150) durchströmt, und die durch Fluid antreibbare Maschine eine Turbine (100) zur Erzeugung von Elektrizität umfasst und der Ozongenerator (150) durch durch die Turbine erzeugte Elektrizität angetrieben wird.

12. Vorrichtung nach einem der Ansprüche 1 bis 10, wobei das Gas Luft umfasst und die Flüssigkeit Wasser umfasst und die Vorrichtung einen Teil einer Wasserbehandlungsanlage umfasst.

13. Vorrichtung zur Einführung eines Gases in eine Flüssigkeit nach einem der Ansprüche 1 bis 10, wobei die Vorrichtung einen Teil einer Fermentationsanlage umfasst.

14. Vorrichtung nach einem der Ansprüche 1 bis 10, wobei das Gas Luft umfasst und die Vorrichtung einen Teil einer Luftkühlanlage umfasst, die einen Luftstrom zum Kühlen verwendet, wobei der Luftstrom dadurch erzeugt wird, dass Luft durch die Öffnungen gesaugt wird, wobei die Vorrichtung weiterhin einen Wärmetauscher (140) umfasst, wobei der Wärmetauscher (140) so in dem Luftstrom angeordnet ist, dass durch die Öffnungen gesaugte Luft zunächst den Wärmetauscher (140) durchströmt.

15. Verfahren zur Einführung eines Gases in eine Flüssigkeit unter Verwendung der Vorrichtung von Anspruch 1, das die folgenden Schritte umfasst:
Führen eines Flüssigkeitsstroms durch mehrere getrennte Kanäle, die durch eine Fluidleitausbildung in einer Leitung definiert werden, wobei die Fluidleitausbildung eine mittlere Struktur umfasst, die mehrere Schaufeln stützt, wobei die mehreren Schaufeln die Kanäle definieren, derart, dass sie in einer senkrecht zu einer Fluidstromrichtung durch die Kanäle verlaufenden Richtung gegeneinander isoliert sind, und wobei jeder Kanal eine Strömungsbeschleunigungsverengung für den Fluidstrom bereitstellt, so dass eine Beschleunigung von in den Kanälen strömendem Fluid bei seiner Strömung durch die Verengung bewirkt wird;
Beaufschlagen des Fluidstroms mit einer Drehkomponente durch die Schaufeln;
Führen eines Gasstroms zu mehreren in den Strömungsbeschleunigungsverengungen mindestens einiger der Kanäle angeordneten Öffnungen; wobei bewirkt wird, dass der Gasstrom von der Gasquelle durch einen durch die erhöhte Durchflussrate verursachten reduzierten Druck in der Strömungsbeschleunigungsverengung durch die Öffnungen gesaugt wird, um in dem Fluidstrom mitgeführt zu werden.

## Revendications

1. Appareil destiné à introduire du gaz dans un liquide, comportant :
un conduit (20) ;
une formation (10) d'orientation de fluide disposée à l'intérieur dudit conduit (20) et définissant une pluralité de canaux discrets à l'intérieur dudit conduit (20), lesdits canaux étant isolés les uns des autres dans une direction perpendiculaire à une direction d'écoulement du fluide à travers lesdits canaux, chaque canal présentant un étranglement accélérateur d'écoulement audit écoulement de fluide de telle façon que du fluide s'écoulant dans chacun desdits canaux soit amené à accélérer tandis qu'il s'écoule à travers lesdits étranglements accélérateurs d'écoulement ;
au moins une partie desdits canaux comportant des orifices à l'intérieur desdits étranglements accélérateurs d'écoulement, lesdits orifices étant en communication fluidique avec une source de gaz, de telle façon que ledit gaz soit aspiré à travers lesdits orifices pour être entraîné dans ledit écoulement de fluide sous l'effet d'une pression réduite dans lesdits canaux, causée par ledit écoulement de fluide ;
ladite formation d'orientation de fluide comportant une structure centrale portant une pluralité d'ailettes, ladite pluralité d'ailettes définissant lesdits canaux ; **caractérisé en ce que**
ladite pluralité d'ailettes est disposée suivant un certain angle par rapport à une direction d'écoulement de telle façon qu'une composante rotationnelle soit introduite par lesdites ailettes dans ledit écoulement de fluide qui les longe.

2. Appareil destiné à introduire du gaz dans un liquide selon la revendication 1, ladite pluralité de canaux présentant chacun la forme d'un secteur dudit conduit.

3. Appareil destiné à introduire du gaz dans un liquide selon l'une quelconque des revendications précédentes, ledit conduit (20) comportant un étranglement accélérateur d'écoulement, ladite formation d'orientation de fluide étant disposée à l'intérieur dudit étranglement accélérateur d'écoulement.

4. Appareil destiné à introduire du gaz dans un liquide selon l'une quelconque des revendications précédentes, au moins une partie desdits orifices étant des orifices de conduit formés dans une surface extérieure dudit conduit (20) dans des positions correspondant à au moins une partie desdits canaux.

5. Appareil destiné à introduire du gaz dans un liquide selon l'une quelconque des revendications précédentes, lesdites ailettes étant disposées suivant un certain angle par rapport à ladite direction d'écoulement et lesdits orifices étant situés sur une face supérieure à forte courbure des ailettes.

6. Appareil destiné à introduire du gaz dans un liquide selon l'une quelconque des revendications précédentes, ladite formation (10) d'orientation de fluide étant creuse et étant en communication fluidique avec ladite source de gaz, au moins une partie desdits orifices étant disposée sur ladite formation d'orientation de fluide dans une position correspondant auxdits canaux.

7. Appareil destiné à introduire du gaz dans un liquide selon l'une quelconque des revendications précédentes, au moins une partie desdits orifices de formation d'orientation de fluide étant située dans la région de sommet d'une cuvette en forme de coin sur lesdites ailettes.

8. Appareil selon l'une quelconque des revendications précédentes, la longueur de ladite structure centrale valant entre 3 et 6 fois un diamètre dudit conduit et la longueur desdites aubes valant entre une et 3 fois ledit diamètre.

9. Appareil selon l'une quelconque des revendications précédentes, lesdits orifices étant formés sur une bande (70) montée sur une surface desdits canaux.

10. Appareil destiné à introduire du gaz dans un liquide selon l'une quelconque des revendications précédentes, ledit appareil comportant en outre un moteur (100) pouvant être entraîné par un fluide, ledit moteur (100) pouvant être entraîné par un fluide étant disposé en communication fluidique entre ladite source de gaz et lesdits orifices de telle façon que du gaz aspiré à partir de ladite source de gaz à travers lesdits orifices agisse pour entraîner ledit moteur (100) pouvant être entraîné par un fluide.

11. Appareil selon la revendication 10, ledit gaz comportant de l'air et ledit appareil comportant en outre un générateur (150) d'ozone, ledit générateur (150) d'ozone étant disposé en communication fluidique entre ladite source de gaz et lesdits orifices de telle façon qu'au moins une partie dudit gaz aspiré à partir de ladite source de gaz à travers lesdits orifices passe à travers ledit générateur (150) d'ozone, ledit moteur pouvant être entraîné par un fluide comportant une turbine (100) servant à générer de l'électricité et ledit générateur (150) d'ozone étant alimenté par de l'électricité générée par ladite turbine.

12. Appareil selon l'une quelconque des revendications 1 à 10, ledit gaz comportant de l'air, ledit liquide comportant de l'eau et ledit appareil constituant une partie d'une installation de traitement d'eau.

13. Appareil destiné à introduire du gaz dans un liquide selon l'une quelconque des revendications 1 à 10, ledit appareil constituant une partie d'un appareil de fermentation.

14. Appareil selon l'une quelconque des revendications 1 à 10, ledit gaz comportant de l'air et ledit appareil constituant une partie d'une installation de refroidissement par air qui utilise un écoulement d'air pour le refroidissement, ledit écoulement d'air étant généré par aspiration dudit air à travers lesdits orifices, ledit appareil comportant en outre un échangeur (140) de chaleur, ledit échangeur (140) de chaleur étant disposé dans ledit écoulement d'air de telle façon que de l'air aspiré à travers lesdits orifices passe d'abord à travers ledit échangeur (140) de chaleur.

15. Procédé d'introduction de gaz dans un liquide utilisant l'appareil selon la revendication 1 et comportant les étapes consistant à :
envoyer un écoulement de liquide à travers une pluralité de canaux discrets définis par une formation d'orientation d'écoulement à l'intérieur d'un conduit, ladite formation d'orientation de fluide comportant une structure centrale portant une pluralité d'ailettes, ladite pluralité d'ailettes définissant lesdits canaux de telle façon que lesdits canaux soient isolés les uns des autres dans une direction perpendiculaire à une direction d'écoulement du fluide à travers lesdits canaux, et chaque canal présentant un étranglement accélérateur d'écoulement audit écoulement de fluide de telle façon que du fluide s'écoulant dans lesdits canaux soit amené à accélérer tandis qu'il s'écoule à travers ledit étranglement ;
introduire une composante rotationnelle dans ledit écoulement de fluide au moyen desdites ailettes ;
envoyer un écoulement de gaz vers une pluralité d'orifices disposés à l'intérieur desdits étranglements accélérateurs d'écoulement d'au moins une partie desdits canaux ;
ledit écoulement de gaz étant amené à être aspiré à partir de ladite source de gaz à travers lesdits orifices par une pression réduite dans ledit étranglement accélérateur d'écoulement, causée par ledit débit accru, pour être entraîné dans ledit écoulement de fluide.
